# DEMANDE DE BREVET EUROPEEN

(11) **EP 1 679 222 A1**
(43) Date de publication de la demande: **12.07.2006**
(21) Numéro de dépôt: 06300008.7
(22) Date de dépôt: 04.01.2006
(51) Int. Cl.: B60N 2/015

(54) **Dispositif de fixation d'un élément amovible et un véhicule muni d'un tel dispositif**

(30) Priorité: 07.01.2005 FR 0550065
(71) Demandeur: Peugeot Citroen Automobiles, 78140 Velizy-Villacoublay (FR)
(72) Inventeur: Ciapa, Denis, 95100 Argenteuil (FR)
(74) Mandataire: Fernandez, Francis Lionel

(57) **Abrégé**

L'invention concerne un dispositif de fixation d'un élément (5) amovible sur un véhicule automobile (1) comportant un plancher (4), ledit élément (5) amovible étant rendu solidaire du plancher (4) par l'intermédiaire d'un moyen de verrouillage (7) destiné à coopérer avec un moyen d'arrimage (6), ledit moyen d'arrimage (6) étant consitué d'anneaux (8), une première rangée (6a) d'anneaux étant parallèle à une seconde rangée (6b) d'anneaux.

Selon l'invention, le dispositif se caractérise en ce que ledit au moins un élément (5) amovible comprend au moins deux éléments (7a) de verrouillage disposés au proche d'un premier côté et un unique élément (7b) de verrouillage disposé au proche d'un autre côté, et en ce que ladite première rangée (6a) comporte un nombre d'anneaux (8) différent du nombre d'anneaux de ladite seconde rangée (6b).

## Description

L'invention se rapporte à un dispositif de fixation d'un élément amovible et un véhicule muni d'un tel dispositif.

L'invention concerne plus particulièrement un dispositif de fixation d'au moins un élément amovible sur la structure d'un véhicule automobile.

Il est connu des véhicules automobiles dont le volume de chargement varie en fonction de l'agencement des sièges dans l'habitacle. Une telle modularité est assurée par des rails de guidage contenant des dispositifs particuliers de fixation de sièges. Les rails de guidage sont disposés longitudinalement au véhicule et sont de longueur suffisante pour permettre l'agencement d'un siège selon différentes rangées mais avec une même position transversale. Les sièges amovibles comprennent quant à eux des organes de fixation qui rendent aisée leur déplacement et leur arrimage sur les rails.

Les véhicules à volume de chargement modulable concernent principalement des véhicules de grande dimension, tels des breaks, pour lesquels sont employés des systèmes d'arrimage dont la mise en oeuvre reste, selon la demanderesse, relativement complexe.

La demanderesse a également constaté que le besoin en modularité des éléments mobiles est différent qu'il s'agisse d'un véhicule de type break ou d'un véhicule à usage urbain qui est dimensionnellement plus compact. En effet, il a été relevée que la modularité pour les véhicules de type à usage urbain consiste à la fois en une possibilité d'orientation de l'élément mobile vers l'avant ou l'arrière dans l'habitacle, et en un positionnement de l'élément mobile en plusieurs positions transversales, de sorte à rendre d'autre fonctionnalité, par exemple le transport d'un siège pour enfant ou d'un coffre de rangement, à une zone arrière traditionnellement destinée au rangement des bagages.

Ainsi la demanderesse a constaté que les systèmes d'arrimage utilisés dans des véhicules de grande dimension sont à la fois coûteux à réaliser et ne répondent pas au réel besoin en modularité pour des véhicules compact à usage urbain.

Un but de la présente invention est de pallier tout ou partie des inconvénients de l'art antérieur relevés ci-dessus.

La présente invention a trait à un dispositif de fixation d'un élément amovible sur un véhicule automobile comportant un habitacle délimité en partie inférieure par un plancher, ledit élément amovible étant rendu solidaire du plancher par l'intermédiaire d'un moyen de verrouillage destiné à coopérer avec un moyen d'arrimage, une première rangée d'anneaux étant parallèle à une seconde rangée d'anneaux.

A cette fin, le dispositif selon l'invention, par ailleurs conforme à la définition générique qu'en donne le préambule ci-dessus, est essentiellement caractérisé en ce que ledit au moins un élément amovible comprend au moins deux éléments de verrouillage disposés au proche de la partie avant et uniquement un élément de verrouillage disposé au proche de la partie arrière, et en ce que ladite première rangée comporte un nombre d'anneaux différent du nombre d'anneaux de ladite seconde rangée.

Par ailleurs, le dispositif de l'invention peut comporter l'une ou plusieurs des caractéristiques suivantes :
- les anneaux desdites première et seconde rangées sont disposés en quinconce,
- chacun des anneaux est disposé sur une droite longitudinale au véhicule, et en ce qu'une droite contenant un anneau de ladite seconde rangée est une médiane perpendiculaire à un segment transversal défini par deux anneaux de ladite première rangée,
- ladite première rangée comprend un nombre d'anneaux supérieur au nombre d'anneaux de ladite seconde rangée, de préférence ladite première rangée comporte un anneau de plus que ladite seconde rangée,
- ladite première rangée comporte au moins quatre anneaux d'arrimage et en ce que ladite seconde rangée comporte au moins trois anneaux d'arrimage,
- la distance entre des anneaux distincts et adjacents de ladite première et/ou seconde rangée est identique,
- les anneaux de ladite première rangée et/ou de ladite seconde rangée étant agencés sur au moins un rail,
- ledit moyen de verrouillage se compose de crochets de verrouillages disposés au proche d'un côté avant de l'élément amovible, et en ce qu'une serrure est disposée au proche d'une partie centrale arrière de l'élément amovible,
- l'élément amovible est un siège de sécurité pour enfant.

L'invention concerne également un véhicule automobile muni d'un moyen de fixation comportant un moyen d'arrimage ayant au moins l'une des caractéristiques précédente.

D'autres particularités et avantages apparaîtront à la lecture de la description ci-après faite en référence aux figures dans lesquelles :
- la Fig. 1 concerne une représentation schématique d'un habitacle de véhicule automobile contenant le dispositif de fixation de l'invention,
- la Fig. 2 concerne un agrandissement d'un élément amovible quelconque fixé au véhicule par l'intermédiaire du dispositif de l'invention,
- la Fig. 3 représente un élément amovible du type siège pour enfant fixé au véhicule par l'intermédiaire du dispositif de l'invention,
- la Fig. 4 concerne une vue de dessus de la Fig. 2, dans laquelle l'élément mobile est un siège.

Dans ce qui suit, les orientations utilisées sont les orientations habituelles d'un véhicule automobile et les termes « avant », « arrière », « droite », « gauche » et « latérale » s'entendent par rapport à la position d'un conducteur et au sens de marche normal du véhicule.

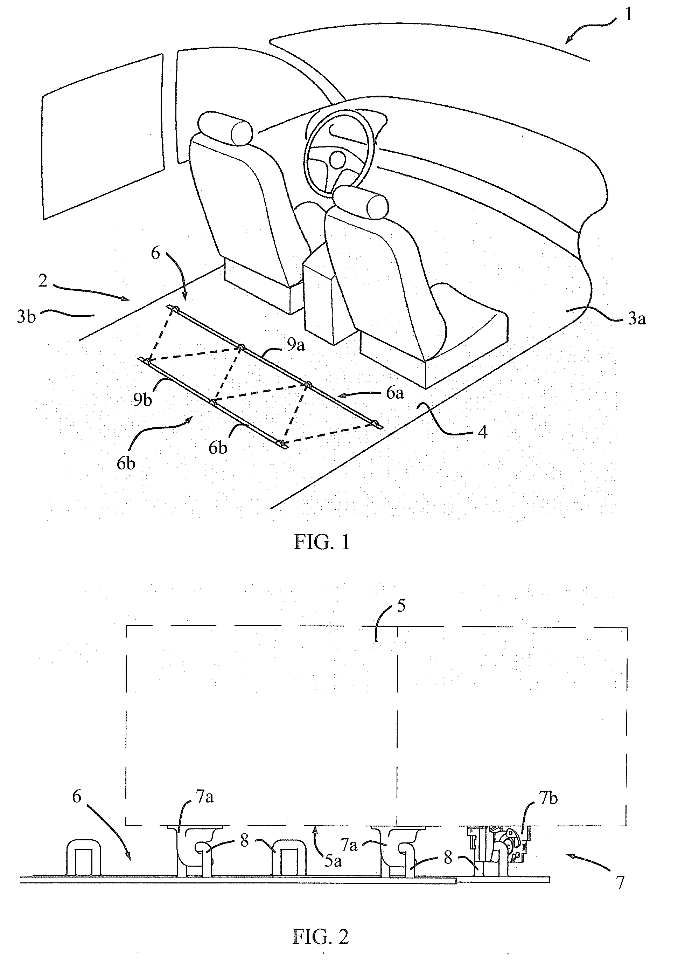

L'habitacle d'un véhicule 1, dont une représentation est donnée en Fig. 1, comporte traditionnellement une zone 3a dédiée aux passagers et au moins une zone 3b dédiée aux bagages. L'agencement d'un siège amovible dans la zone passager et/ou de coffre est connu et permis par des dispositifs de fixation particuliers.

Le véhicule de l'invention est remarquable en ce qu'il donne une plus grande pluralité d'agencements possibles dudit élément amovible sur la structure du véhicule.

L'élément amovible 5, illustré et donné à titre d'exemple en Fig. 2, est destiné à être fixé sur un plancher 4 du véhicule 1 par l'intermédiaire du dispositif de fixation de l'invention. Un tel élément 5 comprend de préférence une base qui est commune à tout type d'élément 5, lequel est par exemple un siège ou un coffre multifonction.

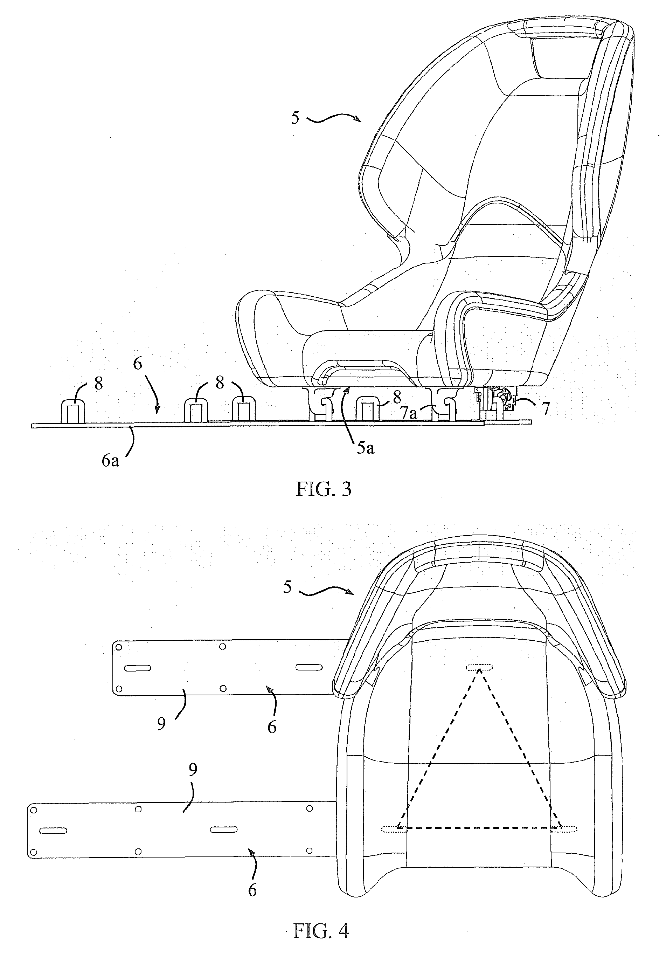

Dans la suite, l'élément amovible 5 choisi est du type d'un siège pour enfant comme illustré en Figs. 3 et 4.

Pour fixer le siège 5 à la structure du véhicule, ce dernier comprend, tout d'abord, un moyen 6 d'arrimage et un moyen 7 de verrouillage. De préférence, le moyen 6 d'arrimage est lié à la structure 4 du véhicule et situé à l'arrière d'une rangée de sièges. Par conséquent, ledit moyen 7 de verrouillage est solidaire du siège 5.

Dans l'illustration donnée de manière non limitative en Fig. 1, le dispositif de fixation est disposé à l'arrière de deux sièges avant du véhicule. De préférence le dispositif de fixation est situé à l'arrière de l'habitacle 5, au proche du coffre ou dans un volume dédié au coffre.

Le dispositif de fixation permet avantageusement l'agencement supplémentaire d'au moins un siège 5, sachant bien entendu qu'au moins un autre siège (non représenté) peut être solidarisé à la structure 4 du véhicule.

Ledit moyen 6 d'arrimage se compose principalement d'une première rangée 6a d'anneaux 8 disposés selon une direction sensiblement perpendiculaires à l'axe longitudinal du véhicule, et d'une seconde rangée 6b d'anneaux 8 disposés selon une direction parallèle à la première rangée.

Le moyen 6 d'arrimage se compose d'anneaux 8 liés au plancher 4 du véhicule, soit par une solidarisation définitive à la structure du véhicule, soit par une solidarisation rapportée. Les anneaux 8 sont ainsi soit soudés au plancher du véhicule dès sa fabrication, ou bien contenus sur au moins un rail 9, de préférence un rail pour chaque rangée d'anneaux, rapporté au plancher et fixé en après vente par au moyen d'assemblage connu, tel un moyen de rivetage ou de vissage par exemple.

Dans un mode de réalisation préféré de l'invention, ledit moyen d'arrimage de la Fig. 1 est une solution du type rapportée qui comprend ainsi un rail avant et un rail arrière, nommés ainsi compte tenu de leur position respective dans l'habitacle. Les deux rails sont disposées parallèlement l'un à l'autre, de tel sorte que la première rangée 6a d'anneaux 8 est ménagée sur le rail avant 9a et que la seconde ragée 6b d'anneaux 8 est ménagée sur le rail arrière 9b.

Les anneaux 8 contenus sur les rails avant et arrière ont pour particularité d'être disposés en quinconce et en nombre différent. Le rail avant 9a comprend ici un nombre d'anneaux 8 supérieur au nombre d'anneaux 8 contenus sur le rail arrière 9b.

De préférence, le dispositif de fixation comprend quatre anneaux 8 disposé sur le rail avant 9a et trois anneaux 8 sur le rail arrière 9b, tel qu'illustré en Figs. 1 et 4.

En ce qui concerne ledit moyen 7 de verrouillage, lequel est destiné à coopérer avec ledit moyen 6 d'arrimage, des éléments de verrouillage qui le composent sont de préférence soit du type d'au moins un crochet 7a ouvert, soit du type d'au moins une serrure 7b, et agencés sur le siège 5 amovible.

Ainsi, le siège 5 comprend une base 5a, disposée en sa partie inférieure, qui est destinée à coopérer au plus près avec le plancher 4 du véhicule. La base 5a est ainsi munie de différents éléments 7a et 7b de verrouillage, de préférence au nombre de trois et disposés à chacun des sommets d'un triangle visible en Fig. 2.

La base 5a du siège se distingue ainsi par un agencement particulier des éléments 7a de verrouillage aux sommets du triangle, pour lequel l'un des côtés est de préférence orienté sensiblement parallèle auxdits rails avant 9a et arrière 9b, disposé en partie avant du siège 5 et définissant deux sommets munis des éléments de verrouillage, de préférence du type d'un crochet 7a.

Le troisième sommet du triangle est de préférence sensiblement disposé en partie arrière du siège et en son milieu, selon une médiane perpendiculaire au côté opposé défini ci-dessus. Le troisième point de fixation comporte un élément différent des deux autres, s'agissant d'une serrure 7b traditionnellement utilisée pour la fixation rapide. La serrure 7b possède une position d'ouverture dans laquelle le siège 5 n'est pas solidaire du plancher 4 du véhicule, et une position de fermeture dans laquelle le siège 5 est fixé au plancher.

La serrure 7b comporte aussi une gâche de déverrouillage que l'utilisateur manoeuvre pour libérer la partie arrière du siège du plancher du véhicule.

En position de fermeture, la serrure lie mécaniquement un des anneaux 8 à la base 5a du siège 5.

Pour fixer le siège 5 au plancher 4, l'utilisateur procède au déplacement du siège selon une direction sensiblement longitudinale au véhicule, de sorte à disposer les crochets 7a du moyen 7 de verrouillage dans les anneaux 8 du moyen 6 d'arrimage contenus sur l'une des deux rangées 6a et 6b, puis selon une direction sensiblement verticale du haut vers le bas jusqu'à ce que le verrou bascule en position de fermeture sur un anneau 8 de l'autre rangée.

Etant donné que le siège 5 comporte trois points de fixation répartis en triangle, le nombre de possibilités de fixation diffère avantageusement selon que l'orientation du siège soit vers l'avant ou vers l'arrière du véhicule.

L'utilisateur peut ainsi fixer l'élément amovible vers l'avant selon trois positions, et vers l'arrière selon deux positions.

Quelle que soit l'orientation de l'élément amovible, vers l'avant ou l'arrière du véhicule, la position longitudinale reste identique et défmie par les rangées d'anneaux liées au plancher du véhicule.

Compte tenu de l'agencement en quinconce des anneaux 8, l'utilisateur peut disposer l'élément 5 amovible, selon qu'il soit orienté vers l'avant ou l'arrière du véhicule, en différents plans transversaux au véhicule.

Ainsi lorsqu'un unique élément 5 amovible est orienté vers l'avant du véhicule, le dispositif de fixation permet son agencement en position latérale gauche, latérale droite ou centrale.

Lorsque l'unique élément 5 amovible est orienté vers l'arrière du véhicule, le dispositif de fixation permet son agencement en position centrale gauche ou centrale droite.

Dans une utilisation à deux éléments amovibles orientés vers l'avant, chacun prend alors une position latérale gauche ou droite.

## Revendications

1. Dispositif de fixation d'un élément (5) amovible sur un véhicule automobile (1) comportant un habitacle (2) délimité en partie inférieure par un plancher (4), ledit élément (5) amovible étant rendu solidaire du plancher (4) par l'intermédiaire d'un moyen de verrouillage (7) destiné à coopérer avec un moyen d'arrimage (6), une première rangée (6a) d'anneaux étant parallèle à une seconde rangée (6b), **caractérisé en ce que** ledit au moins un élément (5) amovible comprend au moins deux éléments (7a) de verrouillage disposés au proche d'un premier côté et un unique élément (7b) de verrouillage disposé au proche d'un autre côté, et **en ce que** ladite première rangée (6a) comporte un nombre d'anneaux (8) différent du nombre d'anneaux de ladite seconde rangée (6b).

2. Dispositif selon la revendication 1, **caractérisé en ce que** les anneaux (8) desdites première et seconde rangées (6a, 6b) sont disposés en quinconce.

3. Dispositif selon la revendication 2, **caractérisé en ce que** chacun des anneaux (8) est disposé sur une droite longitudinale au véhicule, et **en ce qu'**une droite contenant un anneau de ladite seconde rangée (6b) est une médiane perpendiculaire à un segment transversal défini par deux anneaux de ladite première rangée (6a).

4. Dispositif selon l'une quelconque des revendications 1 à 3, **caractérisé en ce que** ladite première rangée (6a) comprend un nombre d'anneaux (8) supérieur au nombre d'anneaux de ladite seconde rangée (6b), de préférence ladite première rangée comporte un anneau de plus que ladite seconde rangée.

5. Dispositif selon la revendication 4, **caractérisé en ce que** ladite première rangée (6a) comporte au moins quatre anneaux (8) d'arrimage et **en ce que** ladite seconde rangée (6b) comporte au moins trois anneaux (8) d'arrimage.

6. Dispositif selon l'une quelconque des revendications 1 à 5, **caractérisé en ce que** la distance entre des anneaux (8) distincts et adjacents de ladite première et/ou seconde rangée (6a, 6b) est identique.

7. Dispositif selon l'une quelconque des revendications 1 à 6, **caractérisé en ce que** les anneaux (8) de ladite première rangée (6a) et/ou de ladite seconde rangée (6b) sont agencés sur au moins un rail (9a, 9b).

8. Dispositif selon l'une quelconque des revendications précédentes, **caractérisé en ce que** ledit moyen (7) de verrouillage se compose de crochets (7a) de verrouillages disposés au proche d'un côté avant de l'élément (5) amovible, et **en ce qu'**une serrure (7b) est disposée au proche d'une partie centrale arrière de l'élément amovible.

9. Dispositif selon l'une quelconque des revendications 1 à 8, **caractérisé en ce que** l'élément (5) amovible est un siège de sécurité pour enfant.

10. Véhicule automobile (1) muni d'un dispositif de fixation comportant un moyen d'arrimage (6) selon l'une quelconque des revendications 1 à 7.
